# EUROPÄISCHE PATENTSCHRIFT

(11) **EP 3 050 172 B1**
(45) Veröffentlichungstag und Bekanntmachung des Hinweises auf die Patenterteilung: **10.01.2018**
(21) Anmeldenummer: 14781826.4
(22) Anmeldetag: 22.09.2014
(51) Int. Cl.: H01R 13/52, H01R 13/502

(54) **STECKVERBINDERTEIL MIT EINER ENTWÄSSERUNG**
PLUG CONNECTOR PART HAVING A DRAIN
ÉLÉMENT DE CONNECTEUR AVEC PURGE

(30) Priorität: 24.09.2013 DE 102013110547
(43) Veröffentlichungstag der Anmeldung: 03.08.2016
(73) Patentinhaber: Phoenix Contact e-Mobility GmbH, 32816 Schieder-Schwalenberg (DE)
(72) Erfinder: FELDNER, Ralf, 32670 Detmold (DE)
(74) Vertreter: Janke, Christiane
(86) Internationale Anmeldenummer: PCT/EP2014/070086
(87) Internationale Veröffentlichungsnummer: WO 2015/044069

(56) Entgegenhaltungen:
- EP-A1- 2 390 959
- EP-A1- 2 573 880
- EP-B1- 0 634 818
- US-A1- 2011 212 645

## Beschreibung

Die Erfindung betrifft ein Steckverbinderteil zum Übertragen eines Ladestroms nach dem Oberbegriff des Anspruchs 1.

Ein derartiges Steckverbinderteil umfasst ein erstes Gehäuseteil, das einen Steckabschnitt und mindestens eine in dem Steckabschnitt angeordnete Kontaktöffnung mit einem darin angeordneten Kontakt aufweist. Der Steckabschnitt ist entlang einer Steckrichtung mit einem anderen Steckverbinderteil in Eingriff bringbar und weist eine entlang der Steckrichtung erstreckte Außenwandung auf. Ein zweites Gehäuseteil ist vorgesehen, das eine Wandung aufweist, die der Außenwandung des Steckabschnitts zumindest abschnittsweise gegenüberliegt und mit der Außenwandung einen Zwischenraum bildet. Das zweite Gehäuseteil fungiert als Blende und erstreckt sich hierzu zumindest abschnittsweise um den Steckabschnitt herum, wobei ein komplementäres, anderes Steckverbinderteil mit einer darin angeordneten Steckkontur in den Zwischenraum eingesteckt werden kann, um auf diese Weise zumindest einen Kontakt in die mindestens eine Kontaktöffnung zur elektrischen Kontaktierung einzuführen.

Solche Steckverbinderteile zum Übertragen eines Ladestroms finden beispielsweise an Elektrofahrzeugen, an Ladestationen zum Aufladen von Elektrofahrzeugen oder an Ladekabeln zum Verbinden eines Elektrofahrzeugs mit einer Ladestation Verwendung. Weil ein beispielsweise an einem Fahrzeug angeordnetes Steckverbinderteil bei üblicher Benutzung des Fahrzeugs auch im Freien verwendet wird und eine Abdichtung des Steckverbinderteils nach außen schwer, wenn nicht gar unmöglich ist, kann beispielsweise bei Regenwetter Feuchtigkeit in das Steckverbinderteil, insbesondere in die Kontaktöffnungen eindringen. Aus diesem Grunde ist erforderlich sicherzustellen, dass in die Kontaktöffnungen gelangendes Wasser auch wieder abfließen kann, damit in den Kontaktöffnungen angeordnete Kontakte sicher und zuverlässig mit Kontakten eines komplementären, anderen Steckverbinderteils kontaktiert werden können. Insbesondere bei Frost kann in einer Kontaktöffnung stehendes Wasser gegebenenfalls einfrieren, was ein Anschließen eines komplementären Steckverbinderteils und somit einen Ladevorgang gegebenenfalls unmöglich machen kann.

Herkömmlich ist bei solchen Steckverbinderteilen daher vorgesehen, an einer Kontaktöffnung eine Entwässerung hin zu einer in Steckrichtung hinter der Kontaktöffnung gelegenen Ebene vorzusehen, wie dies beispielsweise in der WO 2011/104 609 A1 beschrieben ist. Dies bringt jedoch den Nachteil mit sich, dass in Steckrichtung betrachtet hinter den Kontaktöffnungen ein Raum vorgesehen werden muss, in den hinein entwässert werden kann, der jedoch auch zusätzlich abzudichten ist.

Es besteht daher ein Bedürfnis nach Steckverbinderteilen, die eine Entwässerung auf andere Art und Weise ermöglichen.

Aus der EP 2 390 959 A1 ist ein Steckverbinderteil nach dem Oberbegriff des Anspruchs 1 bekannt, welches in einem Fahrzeug angeordnet werden kann, wobei das Steckverbinderteil ein einteilig ausgebildetes Gehäuse aufweist.

Bei einem aus der EP 2 573 880 A1 bekannten Steckverbinderteil ist ein Entwässerungssystem mit Ablaufkanälen vorgesehen, die dazu ausgebildet sind, Wasser hin zu einer Abflussleitung zu leiten.

Andere Steckverbinderteile, die eine Entwässerung vorsehen, sind beispielsweise aus der DE 694 28 636 T2 und der EP 0 634 818 B1 bekannt.

Aufgabe der vorliegenden Erfindung ist es, ein Steckverbinderteil zur Verfügung zu stellen, das auf einfache, kostengünstig herstellbare Weise eine Entwässerung ermöglicht und dabei in günstiger Weise abzudichten ist.

Diese Aufgabe wird durch einen Gegenstand mit den Merkmalen des Anspruchs 1 gelöst.

Demnach sind das erste Gehäuseteil und das zweite Gehäuseteil getrennt voneinander gefertigt und der Steckabschnitt weist mindestens eine Entwässerungsöffnung auf, die sich von der mindestens einen Kontaktöffnung zur Außenwandung erstreckt und ausgebildet ist, eine Flüssigkeit aus der Kontaktöffnung in den Zwischenraum zwischen der Außenwandung des Steckabschnitts des ersten Gehäuseteils und der Wandung des zweiten Gehäuseteils zu leiten.

Die vorliegende Erfindung geht von dem Gedanken aus, Entwässerungsöffnungen an dem Steckabschnitt vorzusehen, die in die Kontaktöffnungen des Steckabschnitts eindringende Flüssigkeit hin zur Außenwandung und damit in den von dem zweiten Gehäuseteil eingefassten Zwischenraum leiten können. Das zweite Gehäuseteil dient als Blende und erstreckt sich entlang einer Umfangsrichtung um die Steckrichtung um den Steckabschnitt des ersten Gehäuseteils herum. Der Zwischenraum ist zwischen der Außenwandung des Steckabschnitts und der Wandung des zweiten Gehäuseteils eingefasst und bildet den Raum, in den eine Steckkontur eines komplementären, anderen Steckverbinderteils zum Anschließen an das Steckverbinderteil eingesteckt wird.

Dadurch, dass eine Entwässerung in den Zwischenraum zwischen dem Steckabschnitt und der Wandung des zweiten Gehäuseteils erfolgt, kann auf das Vorsehen einer zusätzlichen Entwässerungsebene hinter der normativ vorgegebenen Steckebene des Steckverbinderteils verzichtet werden. Der zwischen dem Steckabschnitt und dem zweiten Gehäuseteil gebildete Zwischenraum kann auf vergleichsweise einfache Weise abgedichtet werden, ohne dass das Risiko für Überspannungen an einer hierzu verwendeten Dichtung besteht.

Vorzugsweise weist der Steckabschnitt mehrere Kontaktöffnungen mit daran angeordneten Kontakten auf, wobei jeder Kontaktöffnung genau eine Entwässerungsöffnung zugeordnet ist. Die Kontaktöffnungen erstrecken sich hierbei entlang der Steckrichtung, so dass beispielsweise Kontaktstifte eines anderen Steckverbinderteils in die Steckrichtung in die Kontaktöffnungen eingeführt werden können. Die Entwässerungsöffnungen erstrecken sich hierbei vorzugsweise quer zur Steckrichtung und verbinden somit die Kontaktöffnungen mit dem den Steckabschnitt umgebenden Zwischenraum, so dass Feuchtigkeit aus den Kontaktöffnungen in den Zwischenraum abgeleitet werden kann.

Die Entwässerung erfolgt vorzugsweise in schwerkraftgetriebener Weise. Hierzu öffnet die einer Kontaktöffnung zugeordnete Entwässerungsöffnung die Kontaktöffnung nach unten - Bezug genommen wird auf eine bestimmungsgemäße Anordnung und Verwendung des Steckverbinderteils beispielsweise an einem Fahrzeug -, so dass in die Kontaktöffnung eintretende Feuchtigkeit, beispielsweise Regenwasser, angetrieben durch die Schwerkraft durch die Entwässerungsöffnung aus der Kontaktöffnung ausfließen kann. Die Entwässerungsöffnung ist hierbei bevorzugt - betrachtet entlang der Schwerkraftrichtung, in die die Schwerkraft wirkt - am tiefsten Punkt der Kontaktöffnung angeordnet, so dass Flüssigkeit aus der Kontaktöffnung schwerkraftbedingt in die Entwässerungsöffnung fließt und in den Zwischenraum abgeleitet wird.

In einer konkreten Ausgestaltung eines Steckverbinderteils weist das erste Gehäuseteil einen ersten Steckabschnitt und einen zweiten Steckabschnitt auf, die quer zur Steckrichtung voneinander beabstandet sind. Das zweite Gehäuseteil weist demgegenüber eine erste Wandung, die mit dem ersten Steckabschnitt einen ersten Zwischenraum bildet, und eine zweite Wandung, die mit dem zweiten Steckabschnitt einen zweiten Zwischenraum bildet, auf. Ein solches Steckverbinderteil kann beispielsweise einen sogenannten Kombo-Stecker verwirklichen, der sowohl zur Übertragung eines Wechselstroms als auch zur Übertragung eines Gleichstroms zum Aufladen eines Fahrzeugs an unterschiedlichen Ladestationen ausgebildet ist. An dem ersten Steckabschnitt können in diesem Fall beispielsweise Lastkontakte zur Übertragung eines Wechselstroms angeordnet sein, während der zweite Steckabschnitt Lastkontakte zur Übertragung eines Gleichstroms aufweist. Die an den unterschiedlichen Steckabschnitten gebildeten Zwischenräume können hierbei in Strömungsverbindung miteinander stehen, wobei beispielsweise der erste Steckabschnitt, betrachtet entlang der Schwerkraftrichtung, oberhalb des zweiten Steckabschnitts angeordnet ist, so dass über die Öffnung zwischen den Zwischenräumen Flüssigkeit aus dem dem ersten Steckabschnitt zugeordneten ersten Zwischenraum in den dem zweiten Steckabschnitt zugeordneten zweiten Zwischenraum einfließen kann.

Das erste Gehäuseteil kann beispielsweise eine Basis aufweisen, an der der mindestens eine Steckabschnitt angeordnet ist. Das zweite Gehäuseteil liegt in diesem Fall an der Basis an und ist über ein Dichtelement gegenüber der Basis des ersten Gehäuseteils abgedichtet. Der Steckabschnitt erhebt sich von der Basis und springt beispielsweise zylindrisch von der Basis vor (wobei der Steckabschnitt nicht notwendigerweise einen kreisförmigen Querschnitt aufweist), und die Wandung des zweiten Gehäuseteils schließt an die Basis an und erstreckt sich um den Steckabschnitt herum. Über das Dichtelement ist eine einfache Dichtung des zweiten Gehäuseteils gegenüber der Basis des ersten Gehäuseteils möglich, so dass Feuchtigkeit aus dem innerhalb des zweiten Gehäuseteils gebildeten Zwischenraum nicht in einen Trockenraum an der dem zweiten Gehäuseteil abgewandten Seite der Basis gelangen kann.

Um ein Ableiten von Feuchtigkeit aus dem zwischen dem Steckabschnitt und der Wandung des ersten Gehäuseteils gebildeten Zwischenraum zu ermöglichen, ist an der Basis vorzugsweise eine Abflussöffnung vorgesehen, die - betrachtet entlang der Schwerkraftrichtung - vorzugsweise an einem unterhalb des Steckabschnitts angeordneten Ort der Basis angeordnet ist, damit schwerkraftbedingt Flüssigkeit aus dem Zwischenraum in die Abflussöffnung und darüber in eine gegebenenfalls an die Abflussöffnung anschließende Abflussleitung einfließen kann. Über die Abflussöffnung wird somit der Zwischenraum entwässert, so dass auch in dem Zwischenraum sich kein Wasser sammeln kann, das bei Frost gegebenenfalls einfrieren könnte.

Die Abflussöffnung ist vorteilhafterweise in die Basis des ersten Gehäuseteils eingeformt, so dass über die Basis und eine daran eventuell anschließende Abflussleitung eine Flüssigkeit abgeleitet werden kann. Denkbar und möglich ist aber auch, eine Abflussöffnung beispielsweise in die Wandung des zweiten Gehäuseteils einzuformen, so dass eine Entwässerung des Zwischenraums durch die Wandung des zweiten Gehäuseteils hindurch erfolgen kann.

Im Sinne der vorliegenden Erfindung erstreckt sich die einer Kontaktöffnung zugeordnete Entwässerungsöffnung von der Kontaktöffnung hin zur entlang der Steckrichtung erstreckten Außenwandung des Steckabschnitts. Die Entwässerung erfolgt somit über die Außenwandung des Steckabschnitts und damit in einen Zwischenraum, der zwischen dem Steckabschnitt und dem als Blende dienenden zweiten Gehäuseteil gebildet ist. Um hierbei eine einfache Fertigung des Steckverbinderteils zu ermöglichen, sind das erste Gehäuseteil und das zweite Gehäuseteil als gesonderte, jeweils einstückige Formteile beispielsweise mittels Kunststoffspritzgießen hergestellt. Dadurch, dass das erste Gehäuseteil und das zweite Gehäuseteil getrennt voneinander gefertigt werden, können die einem Steckabschnitt zugeordneten Entwässerungsöffnungen ohne weiteres in den Steckabschnitt eingeformt werden, wobei sich eine einfache Entformbarkeit des ersten Gehäuseteils bei Herstellung mittels Kunststoffspritzgießen ergibt.

Die Entwässerungsöffnungen können beispielsweise durch sogenannte Schieber beim Kunststoffspritzgießen quer zur Steckrichtung in den Steckabschnitt eingeformt werden. Nach der Herstellung der Formteile werden das erste Gehäuseteil und das zweite Gehäuseteil dann aneinander angesetzt, wobei ein Übergang zwischen dem ersten Gehäuseteil und dem zweiten Gehäuseteil feuchtigkeitsdicht mittels eines geeigneten Dichtelements abgedichtet wird.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Fahrzeugs an einer Ladestation zum Aufladen des Fahrzeugs;
- Fig. 2: eine Ansicht eines Ausführungsbeispiels eines Steckverbinderteils in Form einer Ladebuchse;
- Fig. 3: eine Ansicht des Steckverbinderteils gemäß Fig. 2, bei voneinander getrennten Gehäuseteilen;
- Fig. 4: eine Teilschnittansicht des Steckverbinderteils entlang einer quer zu einer Steckrichtung erstreckten Querschnittsebene; und
- Fig. 5: eine Längsschnittansicht durch das Steckverbinderteil.

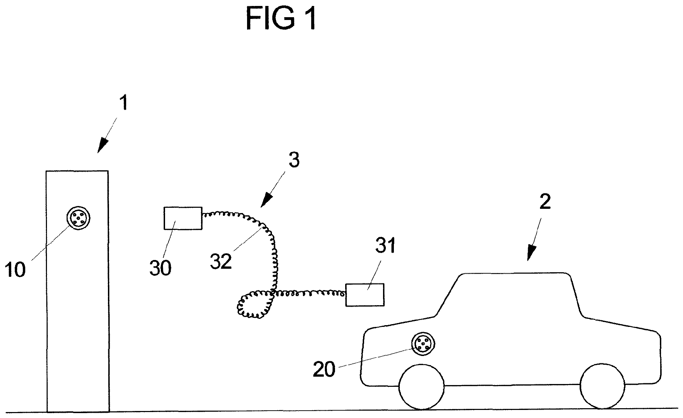

Fig. 1 zeigt in einer schematischen Ansicht ein Fahrzeug 2, das elektrisch angetrieben ist und dementsprechend ein elektrisches System mit einem elektrischen Antrieb und einem elektrischen Energiespeicher in Form von aufladbaren Batterien aufweist (umgangssprachlich auch bezeichnet als Elektrofahrzeug). Das Fahrzeug 2 weist ein Steckverbinderteil 20 in Form einer Ladebuchse auf, die über ein Ladekabel 3 mit einer Ladestation 1 verbunden werden kann, um die Batterien des Fahrzeugs 2 aufzuladen und das Fahrzeug 2 somit mit elektrischem Strom zu versorgen. Das Ladekabel 3 weist zwei Steckverbinderteile 30, 31 in Form von Ladesteckern auf, die über ein Kabel 32 miteinander verbunden sind. Die Ladestation 1 umfasst ein Steckverbinderteil 10 in Form einer Ladebuchse. Zum Anschließen des Fahrzeugs 2 kann das Steckverbinderteil 31 des Ladekabels 3 in das Steckverbinderteil 20 des Fahrzeugs 2 und das Steckverbinderteil 30 des Ladekabels 3 in das Steckverbinderteil 10 der Ladestation 1 eingesteckt werden, so dass in dem Kabel 32 geführte Leitungen eine elektrische Verbindung zwischen dem Fahrzeug 2 und der Ladestation 1 herstellen.

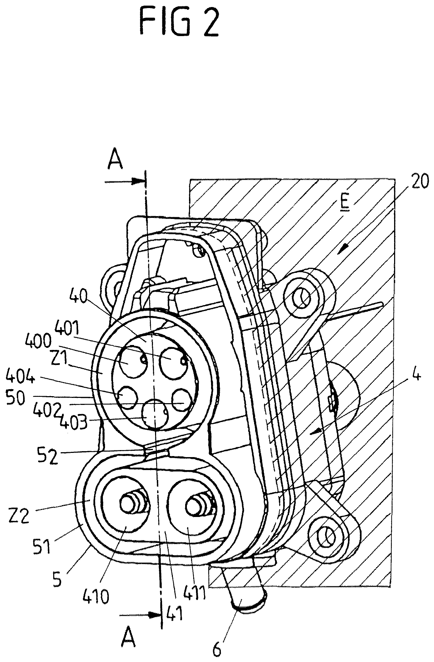

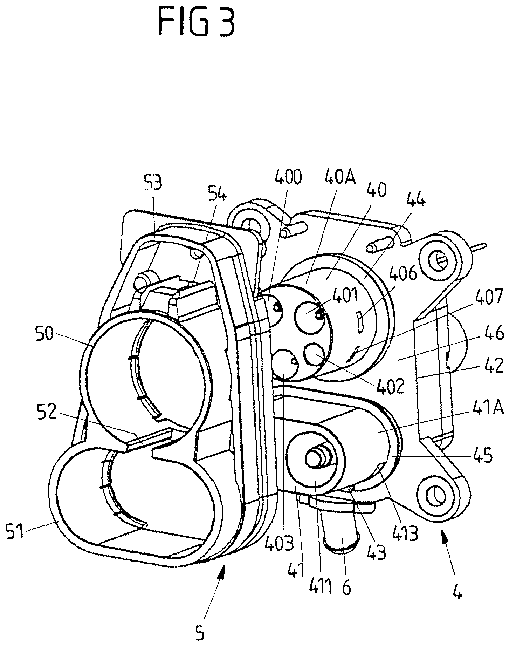

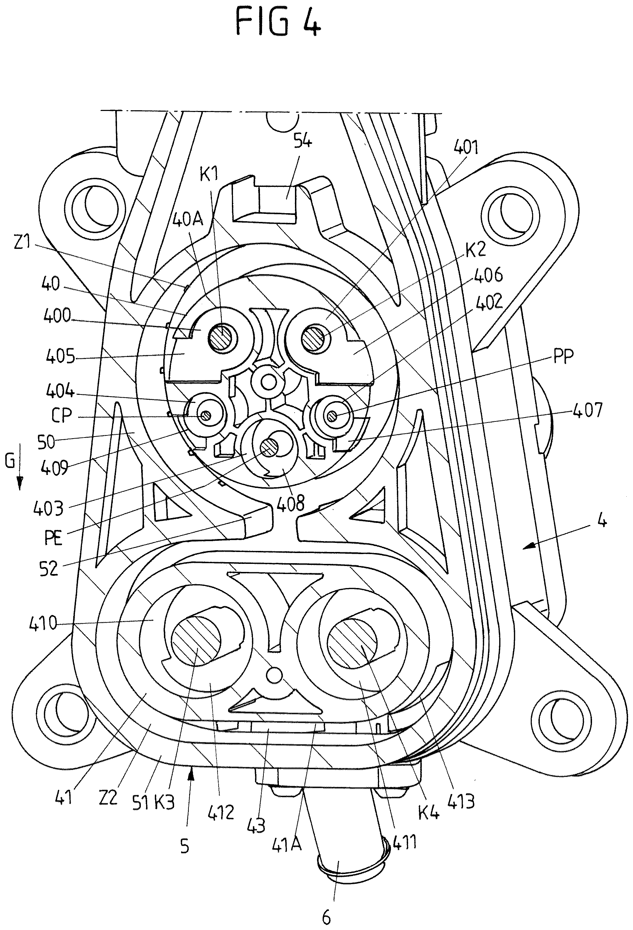

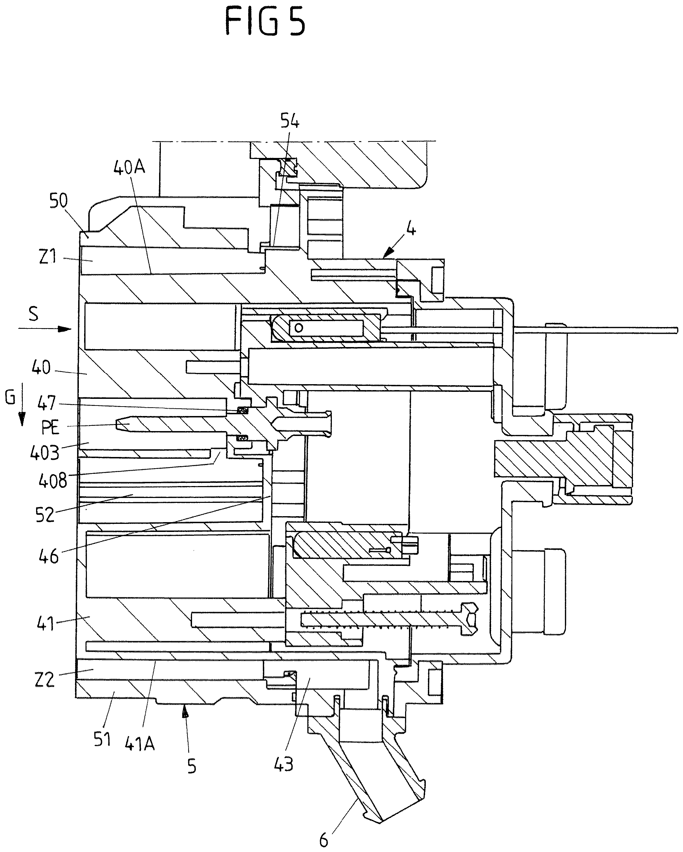

Ein Ausführungsbeispiel eines Steckverbinderteils 20, das beispielsweise als Ladebuchse an einem Fahrzeug 2 verwendet werden kann, zeigen Fig. 2 bis 5. Fig. 2 und 3 zeigen hierbei das Steckverbinderteil in einer Gesamtansicht, wobei in Fig. 3 ein erstes Gehäuseteil 4 und ein zweites Gehäuseteil 5 des Steckverbinderteils 20 getrennt voneinander dargestellt sind. Fig. 4 zeigt das Steckverbinderteil 20 in einer entlang einer entlang einer Schnittebene E gemäß Fig. 2 geschnittenen Schnittansicht, und Fig. 5 zeigt eine Längsschnittansicht entlang der Linie A-A gemäß Fig. 2.

Das Ausführungsbeispiel des Steckverbinderteils 20 verwirklicht einen sogenannten Kombo-Stecker, bei dem an einem ersten Gehäuseteil 4 zwei von einer Basis 46 (siehe Fig. 3) vorspringende Steckabschnitte 40, 41 mit daran angeordneten Kontaktöffnungen 400-404 bzw. 410, 411 vorgesehen sind. In den Kontaktöffnungen ist jeweils ein Kontakt CP, PE, PP, K1-K4 (siehe Fig. 4) angeordnet, so dass durch Einführen von Kontaktelementen eines anderen, komplementären Steckverbinderteils (beispielsweise des Steckverbinderteils 31 gemäß Fig. 1) in die Kontaktöffnungen 400-404, 410, 411 ein elektrischer Kontakt hergestellt werden kann.

Bei dem dargestellten Ausführungsbeispiel eines Kombo-Steckers kann über den oberen Steckabschnitt 40 des ersten Gehäuseteils 4 ein Ladestrom in Form eines Wechselstroms übertragen werden. Die Kontakte K1, K2 dienen hierbei als Lastkontakte zur Übertragung eines einphasigen Wechselstroms, während der Kontakt CP einen sogenannten Pilotkontakt zur Übertragung von Steuersignalen, der Kontakt PP einen sogenannten Annäherungskontakt und der Kontakt PE einen Kontakt für einen Schutzleiter bereitstellen. An dem unteren Steckabschnitt 41 hingegen sind Lastkontakte K3, K4 zur Übertragung eines Gleichstroms angeordnet. Der Kombo-Stecker kann damit wahlweise zur Übertragung eines Wechselstroms oder zur Übertragung eines Gleichstroms eingesetzt werden, wobei bei Verwendung zur Übertragung eines Wechselstroms die fünf Kontakte des oberen Steckabschnitts 40 kontaktiert werden, bei Verwendung zur Übertragung eines Gleichstroms hingegen die Kontakte CP, PP und PE des oberen Steckabschnitts 40 sowie die Lastkontakte K3, K4 des unteren Steckabschnitts 41.

Anzumerken ist an dieser Stelle, dass die vorliegende Erfindung grundsätzlich unabhängig ist von der genauen Konfiguration des Steckverbinderteils 20. Eine Entwässerung, wie sie nachfolgend beschrieben werden soll, kann auch bei ganz anderen Steckverbinderteilen als den hier dargestellten Verwendung finden.

An dem ersten Gehäuseteil 4 ist bei dem dargestellten Ausführungsbeispiel ein zweites Gehäuseteil 5 angeordnet, das zwei Wandungen 50, 51 ausbildet, von denen die obere Wandung 50 sich um den oberen Steckabschnitt 40 des ersten Gehäuseteils 4 und die zweite Wandung 51 sich um den unteren Steckabschnitt 41 des ersten Gehäuseteils 4 herum erstreckt. Das zweite Gehäuseteil 5 dient als Blende und bildet zusammen mit den Steckabschnitten 40, 41 des ersten Gehäuseteils 4 zwei Zwischenräume Z1, Z2 aus, die sich ringförmig um die Steckabschnitte 40, 41 herum erstrecken.

Das Steckverbinderteil 20 kann mit einem komplementären, anderen Steckverbinderteil (beispielsweise dem Steckverbinderteil 31 gemäß Fig. 1) in Eingriff gebracht werden, indem eine Steckkontur des anderen Steckverbinderteils in zumindest einen der Zwischenräume Z1, Z2 eingesteckt wird, wodurch Kontaktelemente des anderen Steckverbinderteils in die Kontaktöffnungen 400-404, 410, 411 eines oder beider Steckabschnitte 40, 41 eingeführt werden, so dass eine Kontaktierung der in den Kontaktöffnungen angeordneten Kontakte CP, PE, PP, K1-K4 in vorbestimmter Weise erfolgt. Das Einstecken des komplementären, anderen Steckverbinderteils erfolgt hierbei in eine Steckrichtung S (siehe Fig. 2 und 5). Entsprechend erstrecken sich die Zwischenräume Z1, Z2 und die Kontaktöffnungen 400-404, 410, 411 entlang der Steckrichtung S.

Wie aus Fig. 3 ersichtlich, stehen die Steckabschnitte 40, 41 des ersten Gehäuseteils 4 als erhabene Abschnitte von der Basis 46 vor. Am Fuß der Steckabschnitte 40, 41 sind Erhebungen 44, 45 vorgesehen, die sich um die Steckabschnitte 40, 41 herum erstrecken und an die das zweite Gehäuseteil 5 anzusetzen ist. In angesetztem Zustand liegt das zweite Gehäuseteil 5 an der Basis 46 des ersten Gehäuseteils 4 an, wobei der Übergang zwischen dem ersten Gehäuseteil 4 und dem zweiten Gehäuseteil 5 über ein umlaufendes Dichtelement 42 abgedichtet ist.

Die Wandungen 50, 51 des zweiten Gehäuseteils 5 sind durch eine schlitzartig entlang der Steckrichtung F erstreckte Öffnung 52 unterbrochen, so dass die durch die Wandungen 50, 51 gebildeten Zwischenräume Z1, Z2 in Strömungsverbindung zueinander stehen.

Wie aus Fig. 3 und 4 ersichtlich, ist an jeder Kontaktöffnung 400-404, 410, 411 der Steckabschnitte 40, 41 genau eine Entwässerungsöffnung 405-409, 412, 413 vorgesehen, die die jeweilige Kontaktöffnung 400-404, 410, 411 hin zu einem Zwischenraum Z1, Z2 öffnet. Diese Entwässerungsöffnungen 405-409, 412, 413 dienen zur Entwässerung der Kontaktöffnungen 400-404, 410, 411 und öffnen die Kontaktöffnungen 400-404, 410, 411 - betrachtet entlang der Schwerkraftrichtung G, in die bei bestimmungsgemäßem Einsatz und bei bestimmungsgemäßer Verwendung des Steckverbinderteils 20 die Schwerkraft wirkt (siehe Fig. 5) - nach unten. Die Entwässerungsöffnungen 405-409, 412, 413 bilden hierbei, betrachtet entlang der Schwerkraftrichtung G, den tiefsten Punkt in der jeweils zugeordneten Kontaktöffnung 400-404, 410, 411 aus, so dass schwerkraftbedingt in eine Kontaktöffnung 400-404, 410, 411 eindringende Flüssigkeit in die jeweils zugeordnete Entwässerungsöffnung 405-409, 412, 413 einfließt und somit aus der Kontaktöffnung 400-404, 410, 411 abgeleitet wird.

Jeder Steckabschnitt 40, 41 weist eine Außenwandung 40A, 41A auf, die den Steckabschnitt 40, 41 nach außen hin begrenzt. Die Entwässerungsöffnungen 405-409 erstrecken sich hierbei im Wesentlichen quer zur Steckrichtung S von der jeweils zugeordneten Kontaktöffnung 400-404, 410, 411 hin zur Außenwandung 40A, 41A des jeweiligen Steckabschnitts 40, 41, so dass eine Entwässerung über die Außenwandung 40A, 41A erfolgt. Jeder Außenwandung 40A, 41A liegt eine zugeordnete Wandung 50, 51 des zweiten Gehäuseteils 5 gegenüber, so dass zwischen der Außenwandung 40A, 41A und der jeweils zugeordneten Wandung 50, 51 der jeweilige Zwischenraum Z1, Z2 gebildet ist.

Wie aus Fig. 4 ersichtlich ist jeder Kontaktöffnung 400-404 des ersten, oberen Steckabschnitts 40 eine Entwässerungsöffnung 405-409 zugeordnet, die die Kontaktöffnung hin zum ersten, oberen Zwischenraum Z1 öffnet. Flüssigkeit aus diesen Kontaktöffnungen 400-404 kann somit in den Zwischenraum Z1 einfließen, wobei die Flüssigkeit angetrieben durch die Schwerkraft um den Steckabschnitt 40 herum und hin zur Öffnung 52 zwischen den Zwischenräumen Z1, Z2 fließt und somit in den zweiten, unteren Zwischenraum Z2 eintritt und dort um den zweiten Steckabschnitt 41 herum fließt.

An der Basis 46 ist an einem Punkt unterhalb der Steckabschnitte 40, 41 eine Abflussöffnung 43 angeordnet, die die Basis 46 hin zu einer Abflussleitung 6 öffnet und ein Abgleiten der Flüssigkeit aus dem zweiten Zwischenraum Z2 ermöglicht. Flüssigkeit in dem zweiten Zwischenraum Z2 kann somit durch die Abflussöffnung 43 aus dem zweiten Zwischenraum Z2 ausfließen, wobei die Abflussöffnung 43 am tiefsten Punkt des zweiten Zwischenraums Z2 angeordnet ist und somit schwerkraftbedingt Flüssigkeit aus dem zweiten Zwischenraum Z2 hin zu der Abschlussöffnung 43 fließt.

Dies ist deutlich ersichtlich auch aus Fig. 5: Die Abflussöffnung 43 stellt, betrachtet entlang der Schwerkraftrichtung G, bei bestimmungsgemäßer Anordnung und Verwendung des Steckverbinderteils 20 den tiefsten Punkt innerhalb des zweiten Gehäuseteils 5 dar, so dass Flüssigkeit aus den Zwischenräumen Z1, Z2 schwerkraftbedingt in die Abflussöffnung 43 einfließt und über die Abflussleitungen 6 abgeleitet werden kann.

Die Abflussleitung 6 kann beispielsweise hin zu einem Nassraum eines Fahrzeugs 2 verlegt sein, so dass über die Abflussleitung 6 Flüssigkeit in einen Nassraum des Fahrzeugs 2 abgeleitet werden kann. Die Abflussleitung 6 kann sich aber beispielsweise auch nach außen hin, also zu einem Außenraum außerhalb des Fahrzeugs 2, öffnen.

Wie weiter aus Fig. 5 ersichtlich, ist ein einen Kontakt PE verwirklichender Kontaktstift gegenüber der Basis 46 durch ein ringförmiges Dichtelement 47 (auch als O-Ring bezeichnet) abgedichtet, so dass Feuchtigkeit nicht aus der zugeordneten Kontaktöffnung 403 durch die Basis 46 hindurchdringen kann.

In der oberen, dem ersten Steckabschnitt 40 zugeordneten Wandung 50 des zweiten Gehäuseteils 5 ist oberhalb des ersten Steckabschnitts 40 eine Öffnung 54 angeordnet, die die Wandung 50 hin zu einem von einer Wandung 53 des zweiten Gehäuseteils 5 eingefassten Raum öffnet. Über die Öffnung 54 kann Flüssigkeit aus dem durch die Wandung 53 eingefassten Raum ausfließen und der Raum somit entwässert werden.

Der der Erfindung zugrunde liegende Gedanke ist nicht auf die vorangehend geschilderten Ausführungsbeispiele beschränkt, sondern lässt sich grundsätzlich auch bei gänzlich anders gearteten Ausführungsformen verwirklichen.

Insbesondere ist die Erfindung nicht auf das konkret dargestellte und beschriebene Ausführungsbeispiel eines Steckverbinderteils mit der konkret angegebenen Konfiguration von Kontakten beschränkt. Eine Entwässerung der hier beschriebenen Art ist bei ganz unterschiedlichen Steckverbinderteilen verwendbar, nicht nur bei Kombo-Steckern.

Ein Steckverbinderteil der hier beschriebenen Art kann grundsätzlich an einem Fahrzeug, aber auch an einer Ladestation oder einem Ladekabel zum Einsatz kommen. Eine Entwässerung kann sowohl bei einer Ladebuchse als auch bei einem Ladestecker zum Einsatz kommen werden.

### Bezugszeichenliste

- 1: Ladestation
- 10: Buchse
- 2: Fahrzeug
- 20: Buchse
- 3: Ladekabel
- 30, 31: Stecker
- 4: Gehäuseteil
- 40: Steckabschnitt
- 40A: Außenwandung
- 400-404: Kontaktöffnung
- 405-409: Entwässerungsöffnung
- 41: Steckabschnitt
- 41A: Außenwandung
- 410, 411: Kontaktöffnung
- 412, 413: Entwässerungsöffnung
- 42: Dichtungselement
- 43: Abflussöffnung
- 44, 45: Erhebung
- 46: Basis
- 47: Dichtring
- 5: Gehäuseteil
- 50, 51: Wandungsabschnitt
- 52: Öffnung
- 53: Wandung
- 54: Öffnung
- 6: Abflussleitung
- CP: Pilotkontakt
- E: Schnittebene
- G: Schwerkraftrichtung
- K1, K2, K3, K4: Lastkontakt
- PE: Schutzleiterkontakt
- PP: Annäherungskontakt
- S: Steckrichtung
- Z1, Z2: Zwischenraum

## Patentansprüche

1. Steckverbinderteil zum Übertragen eines Ladestroms, mit
- einem ersten Gehäuseteil (4), das einen Steckabschnitt (40, 41) und mindestens eine in dem Steckabschnitt (40, 41) angeordnete Kontaktöffnung (400-404) mit einem darin angeordneten Kontakt aufweist, wobei der Steckabschnitt (40, 41) entlang einer Steckrichtung (S) mit einem anderen Steckverbinderteil in Eingriff bringbar ist und eine entlang der Steckrichtung (S) erstreckte Außenwandung (40A) aufweist, und
- einem zweiten Gehäuseteil (5), das eine Wandung (53) aufweist, die der Außenwandung (40A) des Steckabschnitts (40, 41) zumindest abschnittsweise gegenüberliegt und mit der Außenwandung (40A) einen zwischen der Außenwandung (40A) des Steckabschnitts (40, 41) und der Wandung (53) des zweiten Gehäuseteils (5) gelegenen Zwischenraum (Z1, Z2) bildet, wobei der Steckabschnitt (40, 41) mindestens eine Entwässerungsöffnung (405-409) aufweist, die sich von der mindestens einen Kontaktöffnung (400-404) zur Außenwandung (40A, 41A) erstreckt und ausgebildet ist, eine Flüssigkeit aus der Kontaktöffnung (400-404) in den Zwischenraum (Z1, Z2) zwischen der Außenwandung (40A, 41A) des Steckabschnitts (40, 41) des ersten Gehäuseteils (4) und der Wandung (50, 51) des zweiten Gehäuseteils (5) zu leiten, **dadurch gekennzeichnet, dass** das erste Gehäuseteil und das zweite Gehäuseteil getrennt voneinander gefertigt sind.

2. Steckverbinderteil nach Anspruch 1, **dadurch gekennzeichnet, dass** die Wandung (50, 51) des zweiten Gehäuseteils (5) sich entlang einer Umfangsrichtung um die Steckrichtung (S) um den Steckabschnitt (40, 41) des ersten Gehäuseteils (4) herum erstreckt.

3. Steckverbinderteil nach Anspruch 1 oder 2, **dadurch gekennzeichnet, dass** der Steckabschnitt (40, 41) mehrere Kontaktöffnungen (400-404) aufweist, wobei jeder Kontaktöffnung (400-404) genau eine Entwässerungsöffnung (405-409) zugeordnet ist.

4. Steckverbinderteil nach einem der Ansprüche 1 bis 3, **dadurch gekennzeichnet, dass** die mindestens eine Kontaktöffnung (400-404) entlang der Steckrichtung (S) und die mindestens eine Entwässerungsöffnung (405-409) quer zur Steckrichtung (S) erstreckt sind.

5. Steckverbinderteil nach einem der vorangehenden Ansprüche, **dadurch gekennzeichnet, dass** die mindestens eine Entwässerungsöffnung (405-409), bei bestimmungsgemäßer Anordnung und Verwendung des Steckverbinderteils (20) insbesondere an einem Fahrzeug (2), entlang der Schwerkraftrichtung (G) betrachtet die Kontaktöffnung (400-404) nach unten öffnet.

6. Steckverbinderteil nach einem der vorangehenden Ansprüche, **dadurch gekennzeichnet, dass** das erste Gehäuseteil (4) einen ersten Steckabschnitt (40) und einen zweiten Steckabschnitt (41) aufweist, die quer zur Steckrichtung (S) voneinander beabstandet sind, wobei das zweite Gehäuseteil (5) eine erste Wandung (50), die mit dem ersten Steckabschnitt (40) einen ersten Zwischenraum (Z1) bildet, und eine zweite Wandung (51), die mit dem zweiten Steckabschnitt (40) einen zweiten Zwischenraum (Z1) bildet, aufweist.

7. Steckverbinderteil nach Anspruch 6, **dadurch gekennzeichnet, dass** der erste Zwischenraum (Z1) und der zweite Zwischenraum (Z2) über eine Öffnung (52) in Strömungsverbindung stehen.

8. Steckverbinderteil nach einem der vorangehenden Ansprüche, **dadurch gekennzeichnet, dass** das erste Gehäuseteil (4) eine Basis (46) aufweist, an der der mindestens eine Steckabschnitt (40, 41) angeordnet ist, wobei das zweite Gehäuseteil (5) an der Basis (46) anliegt und über ein Dichtelement (42) gegenüber der Basis (46) abgedichtet ist.

9. Steckverbinderteil nach Anspruch 8, **dadurch gekennzeichnet, dass** die Basis (46) eine Abflussöffnung (43) zum Ableiten einer Flüssigkeit aus dem Zwischenraum (Z1, Z2) aufweist.

10. Steckverbinderteil nach Anspruch 9, **dadurch gekennzeichnet, dass** an die Abflussöffnung (43) eine Abflussleitung (6) zum Ableiten der Flüssigkeit weg vom Steckverbinderteil (20) anschließt.

11. Steckverbinderteil nach Anspruch 9 oder 10, **dadurch gekennzeichnet, dass** die Abflussöffnung (43), bei bestimmungsgemäßer Anordnung und Verwendung des Steckverbinderteils (20) insbesondere an einem Fahrzeug (2), entlang der Schwerkraftrichtung (G) betrachtet unterhalb des mindestens einen Steckabschnitts (40, 41) an der Basis (46) angeordnet ist.

12. Steckverbinderteil nach einem der vorangehenden Ansprüche, **dadurch gekennzeichnet, dass** das erste Gehäuseteil (4) und das zweite Gehäuseteil (5) als gesonderte, jeweils einstückige Formteile gefertigt sind.

13. Steckverbinderteil nach einem der vorangehenden Ansprüche, **dadurch gekennzeichnet, dass** das erste Gehäuseteil (4) und das zweite Gehäuseteil (5) jeweils mittels Kunststoffspritzgießen gefertigt sind.

## Claims

1. Plug connector part for transmitting a charging current, with
- a first housing part which has a plug-in portion and at least one contact opening, which is arranged in the plug-in portion, with a contact arranged in said contact opening, wherein the plug-in portion can be brought into engagement along a plug-in direction with another plug connector part and has an outer wall extended along the plug-in direction, and
- a second housing part which has a wall which lies opposite the outer wall of the plug-in portion at least in sections and, with the outer wall, forms an intermediate space positioned between the outer wall of the plug-in portion and the wall of the second housing part,
**characterized**
**in that** the plug-in portion (40, 41) has at least one drain opening (405-409) which extends from the at least one contact opening (400-404) to the outer wall (40A, 41A) and is designed to conduct a liquid out of the contact opening (400-404) into the intermediate space (Z1, Z2) between the outer wall (40A, 41A) of the plug-in portion (40, 41) of the first housing part (4) and the wall (50, 51) of the second housing part (5).

2. Plug connector part according to Claim 1, **characterized in that** the wall (50, 51) of the second housing part (5) extends around the plug-in portion (40, 41) of the first housing part (4) along a circumferential direction about the plug-in direction (S).

3. Plug connector part according to Claim 1 or 2, **characterized in that** the plug-in portion (40, 41) has a plurality of contact openings (400-404), wherein each contact opening (400-404) is assigned precisely one drain opening (405-409).

4. Plug connector part according to one of Claims 1 to 3, **characterized in that** the at least one contact opening (400-404) is extended along the plug-in direction (S) and the at least one drain opening (405-409) is extended transversely with respect to the plug-in direction (S).

5. Plug connector part according to one of the preceding claims, **characterized in that**, when the plug connector part (20) is arranged and used as intended, in particular on a vehicle (2), the at least one drain opening (405-409) opens the contact opening (400-404) downwards, as viewed along the direction of gravitational force (G).

6. Plug connector part according to one of the preceding claims, **characterized in that** the first housing part (4) has a first plug-in portion (40) and a second plug-in portion (41), which plug-in portions are spaced apart from each other transversely with respect to the plug-in direction (S), wherein the second housing part (5) has a first wall (50), which forms a first intermediate space (Z1) with the first plug-in portion (40), and a second wall (51) which forms a second intermediate space (Z1) with the second plug-in portion (40).

7. Plug connector part according to Claim 6, **characterized in that** the first intermediate space (Z1) and the second intermediate space (Z2) are connected in terms of flow via an opening (52).

8. Plug connector part according to one of the preceding claims, **characterized in that** the first housing part (4) has a base (46) on which the at least one plug-in portion (40, 41) is arranged, wherein the second housing part (5) lies against the base (46) and is sealed off from the base (46) via a sealing element (42).

9. Plug connector part according to Claim 8, **characterized in that** the base (46) has an outflow opening (43) for conducting a liquid out of the intermediate space (Z1, Z2).

10. Plug connector part according to Claim 9, **characterized in that** an outflow line (6) for conducting the liquid away from the plug connector part (20) adjoins the outflow opening (43).

11. Plug connector part according to Claim 9 or 10, **characterized in that**, when the plug connector part (20) is arranged and used as intended, in particular on a vehicle (2), the outflow opening (43) is arranged on the base (46) below the at least one plug-in portion (40, 41), as viewed along the direction of gravitational force (G).

12. Plug connector part according to one of the preceding claims, **characterized in that** the first housing part (4) and the second housing part (5) are manufactured as separate, in each case single-piece shaped parts.

13. Plug connector part according to one of the preceding claims, **characterized in that** the first housing part (4) and the second housing part (5) are each manufactured by means of injection moulding of plastic.

## Revendications

1. Partie de connecteur à enficher destinée à transmettre un courant de charge, comprenant
- une première partie de boîtier, laquelle possède une portion à enficher et au moins une ouverture de contact disposée dans la portion à enficher et dans laquelle est disposé un contact, la portion à enficher pouvant être amenée en prise le long d'une direction d'enfichage avec une autre partie de connecteur à enficher et possédant une paroi extérieure qui s'étend le long de la direction d'enfichage, et
- une deuxième partie de boîtier, laquelle possède une paroi qui se trouve au moins dans certaines portions à l'opposé de la paroi extérieure de la portion à enficher et qui, avec la paroi extérieure, forme un espace intermédiaire situé entre la paroi extérieure de la portion à enficher et la paroi de la deuxième partie de boîtier,
**caractérisée en ce**
**que** la portion à enficher (40, 41) possède au moins une ouverture de drainage (405-409) qui s'étend de l'au moins une ouverture de contact (400-404) vers la paroi extérieure (40A, 41A) et qui est configurée pour conduire un liquide issu de l'ouverture de contact (400-404) dans l'espace intermédiaire (Z1, Z2) entre la paroi extérieure (40A, 41A) de la portion à enficher (40, 41) de la première partie de boîtier (4) et la paroi (50, 51) de la deuxième partie de boîtier (5).

2. Partie de connecteur à enficher selon la revendication 1, **caractérisée en ce que** la paroi (50, 51) de la deuxième partie de boîtier (5) s'étend le long d'une direction circonférentielle autour de la direction d'enfichage (S) autour de la portion à enficher (40, 41) de la première partie de boîtier (4).

3. Partie de connecteur à enficher selon la revendication 1 ou 2, **caractérisée en ce que** la portion à enficher (40, 41) possède plusieurs ouvertures de contact (400-404), exactement une ouverture de drainage (405-409) étant associée à chaque ouverture de contact (400-404) .

4. Partie de connecteur à enficher selon l'une des revendications 1 à 3, **caractérisée en ce que** l'au moins une ouverture de contact (400-404) s'étend le long de la direction d'enfichage (S) et l'au moins une ouverture de drainage (405-409) transversalement par rapport à la direction d'enfichage (S).

5. Partie de connecteur à enficher selon l'une des revendications précédentes, **caractérisée en ce que** l'au moins une ouverture de drainage (405-409), lorsque la partie de connecteur à enficher (20) est disposée et utilisée conformément à l'usage pour lequel elle a été conçue, notamment sur un véhicule (2), ouvre l'ouverture de contact (400-404) vers le bas lorsqu'elle est vue le long du sens de la gravité (G).

6. Partie de connecteur à enficher selon l'une des revendications précédentes, **caractérisée en ce que** la première partie de boîtier (4) possède une première portion à enficher (40) et une deuxième portion à enficher (41), lesquelles sont espacées l'une de l'autre transversalement par rapport à la direction d'enfichage (S), la deuxième portion de boîtier (5) possédant une première paroi (50), qui forme un premier espace intermédiaire (Z1) avec la première portion à enficher (40), et une deuxième paroi (51), qui forme un deuxième espace intermédiaire (Z3) avec la deuxième portion à enficher (40).

7. Partie de connecteur à enficher selon la revendication 6, **caractérisée en ce que** le premier espace intermédiaire (Z1) et le deuxième espace intermédiaire (Z2) sont en communication fluidique par le biais d'une ouverture (52).

8. Partie de connecteur à enficher selon l'une des revendications précédentes, **caractérisée en ce que** la première partie de boîtier (4) possède une base (46) sur laquelle est disposée l'au moins une portion à enficher (40, 41), la deuxième partie de boîtier (5) reposant sur la base (46) et étant rendue étanche par rapport à la base (46) par le biais d'un élément d'étanchéité (42).

9. Partie de connecteur à enficher selon la revendication 8, **caractérisée en ce que** la base (46) possède une ouverture d'écoulement (43) destinée à l'évacuation d'un liquide hors de l'espace intermédiaire (Z1, Z2).

10. Partie de connecteur à enficher selon la revendication 9, **caractérisée en ce qu'**une conduite d'écoulement (6) destinée à l'évacuation du liquide à l'écart de la partie de connecteur à enficher (20) se raccorde à l'ouverture d'écoulement (43).

11. Partie de connecteur à enficher selon la revendication 9 ou 10, **caractérisée en ce que** l'ouverture d'écoulement (43), lorsque la partie de connecteur à enficher (20) est disposée et utilisée conformément à l'usage pour lequel elle a été conçue, notamment sur un véhicule (2), est disposée au niveau de la base (46) au-dessous de l'au moins une portion à enficher (40, 41) lorsqu'elle est vue le long du sens de la gravité (G).

12. Partie de connecteur à enficher selon l'une des revendications précédentes, **caractérisée en ce que** la première partie de boîtier (4) et la deuxième partie de boîtier (5) sont réalisées sous la forme de pièces moulées séparées, respectivement monobloc.

13. Partie de connecteur à enficher selon l'une des revendications précédentes, **caractérisée en ce que** la première partie de boîtier (4) et la deuxième partie de boîtier (5) sont respectivement fabriquées par moulage par injection de matière plastique.
